# EUROPEAN PATENT SPECIFICATION

(11) **EP 0 643 866 B1**
(45) Date of publication and mention of the grant of the patent: **30.10.1996**
(21) Application number: 93911001.1
(22) Date of filing: 03.05.1993
(51) Int. Cl.: G11B 5/702

(54) **MAGNETIC RECORDING MEDIUM COMPRISING BINDER THAT MAY BE CURED USING BOTH ISOCYANATE AND RADIATION CURING TECHNIQUES**
MAGNETISCHES AUFZEICHNUNGSMEDIUM WELCHES EINEN SOWOHL DURCH STRAHLUNG ALS AUCH DURCH EINE ISOCYANATVERBINDUNG HÄRTBAREN BINDER ENTHÄLT
SUPPORT D'ENREGISTREMENT MAGNETIQUE COMPRENANT UN AGENT DE LIAISON QUI PEUT ETRE DURCI A LA FOIS PAR DES TECHNIQUES DE DURCISSEMENT A L'ISOCYANATE ET PAR RAYONNEMENT

(30) Priority: 04.06.1992 US 893912
(43) Date of publication of application: 22.03.1995
(60) Divisional application: 94119845.9
(73) Proprietor: MINNESOTA MINING AND MANUFACTURING COMPANY, St. Paul, Minnesota 55133-3427 (US)
(72) Inventor: CHERNEGA, John, G., Saint Paul, MN 55133-3427 (US); MUGGEE, John, M., Saint Paul, MN 55133-3427 (US); ELLIS, Richard, J., Saint Paul, MN 55133-3427 (US); MOSBEY, Deral, T., Saint Paul, MN 55133-3427 (US); ANDERSON, Jeffrey, T., Saint Paul, MN 55133-3427 (US)
(74) Representative: VOSSIUS & PARTNER
(86) International application number: US9304151
(87) International publication number: WO9324924

(56) References cited:
- EP-A- 0 464 827
- US-A- 4 745 017
- DATABASE WPI Week 9007, Derwent Publications Ltd., London, GB; AN 90-048025 & JP,A,2 000 618 (TOYOBO KK) 5 January 1990
- PATENT ABSTRACTS OF JAPAN vol. 13, no. 322 (P-902)20 July 1989 & JP,A,10 089 020 (FUJI PHOTO FILM CO LTD) 3 April 1989
- PATENT ABSTRACTS OF JAPAN vol. 15, no. 192 (P-1202)17 May 1991 & JP,A,30 044 819 (FUJI PHOTO FILM CO LTD) 26 February 1991

## Description

The present invention relates to magnetic recording media. More specifically, the present invention relates to magnetic recording media comprising a cured binder obtained from polymers having crosslinkable hydroxy groups and crosslinkable (meth)acrylate groups.

Magnetic recording media generally comprise a magnetizable layer coated on at least one side of a nonmagnetizable support. For particulate magnetic recording media, the magnetizable layer comprises a magnetic pigment dispersed in a polymeric binder. The magnetizable layer may also include other components such as lubricants; abrasives; thermal stabilizers; antioxidants; dispersants; wetting agents; antistatic agents; fungicides; bactericides; surfactants; coating aids; nonmagnetic pigments; and the like.

Some forms of magnetic recording media, such as flexible magnetic recording tape, also have a backside coating applied to the other side of the nonmagnetizable support in order to improve the durability, conductivity, and tracking characteristics of the media. The backside coating typically comprises a polymeric binder, but may also include other components such as lubricants; abrasives; thermal stabilizers; antioxidants; dispersants; wetting agents; antistatic agents; fungicides; bactericides; surfactants; coating aids; nonmagnetic pigments; and the like.

The magnetizable layer and the backside coating, if any, of a majority of conventional magnetic recording media are derived from materials which require curing in order to provide magnetic recording media with appropriate physical and mechanical properties. To prepare such magnetic recording media, the uncured components of the magnetizable layer or the backside coating, as appropriate, are combined with a suitable solvent and then mixed to provide a homogeneous dispersion. The resulting dispersion is then coated onto the nonmagnetizable support, after which the coating is dried, calendered if desired, and then cured.

Curing can be achieved in a variety of ways. According to one approach, the polymeric binder of the magnetizable layer or the backside coating is derived from hydroxy functional polymers. Such polymers rely upon a chemical reaction between the hydroxy functionality and an isocyanate crosslinking agent to achieve curing. The isocyanate crosslinking agent is typically added to the dispersion just prior to the time that the dispersion is coated onto the support.

Radiation curable dispersions have been used as an alternative to isocyanate curable formulations. For radiation curable dispersions, the dispersion is coated onto the support, dried, calendered if desired, and then irradiated with ionizing radiation to achieve curing. Radiation curable dispersions are capable of providing fast, repeatable, controlled crosslinking, thereby eliminating the inconvenient and expensive delays associated with isocyanate curable formulations. Traditionally, radiation curable formulations have relied upon the reactivity of the carbon-carbon double bonds of acrylates, methacrylates, methacrylamides, acrylamides, and the like to achieve crosslinking.

Recent years have seen a marked increase in the density of magnetic recording. For a magnetic recording tape to function effectively at higher recording densities, the magnetic pigment particles of the magnetizable layer must have small particle size, e.g, a size smaller than the smallest "bit" of information. However, the use of smaller-sized pigment particles causes a substantial reduction in the polymer-pigment reinforcement effect, thereby drastically lowering the mechanical stiffness of the magnetizable layer incorporating such pigments. When the mechanical stiffness of the magnetizable layer is drastically lowered, the end result is typically a flimsy, limp tape. Flimsy limp tape causes tape transport difficulties, is highly susceptible to physical damage, is characterized by unreliable head-to-tape contact, and reduces the efficiency of the entire transduction process. A polymeric binder with superior modulus can compensate for the reduction in the polymer-pigment reinforcement effect.

In order to increase the density of information that may be stored on a magnetic recording medium, it is also desirable to increase the weight loading of magnetic pigment in the magnetizable layer while, at the same time, maintaining critical physical and mechanical properties such as durability, coating adhesion, cohesion, modulus, and impermeability. However, it is well known that merely increasing the weight loading of the magnetic pigment can drastically reduce the durability of the magnetic layer and lead to breakage, head staining, debris generation, increased dropouts, decrease in the signal to noise ratio, and the like.

U.S. Pat. No. 4,889,895 describes vinyl chloride copolymers having pendant hydroxy groups and pendant (meth)acrylate groups. These vinyl chloride copolymers are described as being useful in magnetic recording media.

U.S. Pat. No. 4,663,184 describes radiation curable pnosphorylated ester compounds. The compounds are described as being useful as dispersants in magnetic recording media to yield media of improved stiffness.

U.S. Pat. No. 4,786,657 describes an electron beam crosslinkable polyurethane, or polyurea, which is the reaction product of a macrodiol or macrodiamine, 2-glyceryl acrylate or 2-glyceryl methacrylate, a diisocyanate, and optionally a small glycol or diamine.

PCT International Application No. WO 86/00084 describes a method of making substrates carrying a cured polymeric coating in which the coating is cured using electron beam radiation. At page 2, the international application states that metal-organic compounds, such as organometallic acrylates, can be used in coating compositions to give a high rate of curing when exposed to electron beam radiation to give the cured coatings having good flexibility, toughness, and scratch resistance. The compounds are alkyl, aryl, acrylate, or crotonate compounds of tin, silicon, titanian, or zirconium.

Davidson et al., Eur. Polym. J., Vol. 23, No. 2, pp. 105-108, 1987, describe the formation of surface coatings using dibutvltin diacrylate.

U.S. Pat. No. 4,783,370 relates to a magnetic recording medium comprising ferromagnetic particles dispersed in a binder, wherein said binder comprises a vinyl chloridealkyl acrylate copolymer.

In view of the demand for higher density magnetic recording, there is a need for binder materials that provide higher modulus values and that allow higher weight loadings of magnetic pigments to be achieved.

The present invention provides improved magnetic recording media comprising a cured binder system obtained from polymers having both isocyanate crosslinkable hydroxy groups and radiation crosslinkable groups. Advantageously, the binder of the present invention may be cured using both isocyanate and radiation curing techniques. In preferred embodiments, the binder of the present invention is incorporated into magnetizable layers and then cured using both an isocyanate crosslinking agent and ionizing radiation to provide thin magnetizable layers with extremely high modulus.

For example, preferred magnetizable layers of the present invention having a thickness of only 2 to 3 microns and comprising 70 percent by weight of gamma-Fe₂O₂ magnetic pigments have shown flexural modulus values in the range of to 2.4 (14.5 × 10³ mPa) to 2.6 million psi (17.9 × 10³ mPa). Moreover, magnetizable layers of the present invention having a thickness of only 2 microns and comprising 82 percent by weight of barium ferrite magnetic pigments have shown flexural modulus values in the range of 0.8 to 1.1 million psi (7.6 × 10³ mPa). Surprisingly, the magnetizable layers of the present invention achieve these modulus values while exhibiting excellent durability without becoming brittle. The high modulus characteristics of the present invention are particularly advantageous for use in higher density magnetic recording tape applications in which relatively smaller-sized magnetic pigments, e.g., barium ferrite, are used.

In one aspect, the present invention concerns a magnetic recording medium comprising a magnetizable layer provided on a nonmagnetizable support. The magnetizable layer comprises a magnetic pigment dispersed in a cured binder. The cured binder is derived from binder materials comprising:
(a) a first polymer having a Tg of about 60°C or more, wherein said first polymer comprises a plurality of isocyanate crosslinkable hydroxy groups and a plurality of radiation crosslinkable groups;
(b) a second polymer having a Tg of about 25°C or less, wherein said second polymer comprises a plurality of isocyanate crosslinkable hydroxy groups and a plurality of radiation crosslinkable curable groups, wherein the weight ratio of the second polymer to the first polymer is in the range from 1:19 to 19:1; and
(c) an isocyanate crosslinking agent, wherein the molar ratio of NCO groups from the isocyanate crosslinking agent to the total number of OH groups from the first and second polymers is greater than 0 ; and wherein the binder materials have been cured with radiation.
Preferably, the weight ratio of the second polymer to the first polymer is in the range from 2:1 to 1:2, more preferably 2:1 to 1:1.

In preferred embodiments of the present invention, the first polymer is a vinyl chloride copolymer and the second polymer is a polyurethane polymer. In the present invention, the binder materials comprise an isocyanate crosslinking agent, wherein the molar ratio of NCO groups from the isocyanate crosslinking agent to the total number of OH groups from the first and second polymers is greater than 0.

In another aspect, the present invention concerns a process of making a magnetic recording medium. An admixture of ingredients is milled in a solvent to form a magnetic dispersion, wherein the ingredients of the admixture comprise a magnetic pigment and a first polymer, wherein the first polymer is as defined above. Preferably, the solvent is present in a sufficient amount such that the magnetic dispersion contains 40 to 60 weight percent of the solvent.

After milling, additional ingredients are then blended into the magnetic dispersion. The additional ingredients comprise additional amounts of the first polymer if desired, a second polymer wherein the second polymer is as described above, a sufficient amount of an isocyanate crosslinking agent such that the ratio of NCO groups from the isocyanate crosslinking agent to the total number of OH groups from the first and second polymers is greater than 0, and optionally an additional amount of solvent such that the resulting magnetic dispersion contains 50 to 80 weight percent of solvent. The additional ingredients are blended into the magnetic dispersion under laminar shear conditions. The weight ratio of the first polymer to the second polymer in the resulting dispersion is in the range from 1:19 to 19:1.

After blending the additional ingredients into the magnetic dispersion, the dispersion is coated onto a nonmagnetizable support, the magnetic pigment is oriented, and the coated support is then dried. A dried, magnetizable layer provided on the nonmagnetizable support is thereby formed. After drying, the surface of the magnetizable layer is calendered. After calendering, the magnetizable layer is irradiated with an amount of electron-beam radiation, preferably in the range from 1 to 10 Mrads.

For purposes of the present invention, the term "radiation crosslinkable" includes moieties that undergo crosslinking reactions upon exposure to ionizing radiation. Such moieties include, for example, vinyl, allyl, vinyl ether, acrylate, methacrylate, methacrylamide, acrylamide, maleates, fumarate, and maleimide moieties.

Preferably, the first and second polymers are compatible with each other. The term "compatible" means that the first and second polymers form mixtures having a single Tg. The term "Tg" means glass transition temperature. In the practice of the present invention, Tg is determined using the differential scanning calorimetry technique.

The particular nonmagnetizable support of the present invention is not critical and may be any suitable support known in the art. Examples of suitable support materials include, for example, polyesters such as polyethylene terephthalate ("PET"); polyolefins such as polypropylene; cellulose derivatives such as cellulose triacetate or cellulose diacetate; polymers such as polycarbonate, polyvinyl chloride, polyimide, polyphenylene sulfide, polyacrylate, polyether sulphone, polyether ether ketone, polyetherimide, polysulphone, aramid film, polyethylene 2,6-naphthalate film, fluorinated polymer, liquid crystal polyesters, polyamide; metals such as aluminum, or copper; paper; or any other suitable material.

A magnetizable layer is provided on the support. The components of the magnetizable layer comprise a magnetic pigment dispersed in a cured binder. The type of magnetic pigment used in the present invention is not critical and may include any suitable magnetic pigment known in the art including iron oxides such as gamma Fe₂O₃ and Fe₃O₄; cobalt-modified iron oxides; chromium dioxide, barium ferrites such as BaCoₓTiₓFe₁₂₋₂ₓO₁₉ and the like; and metallic pigments such as Fe and the like. The magnetizable layer of the present invention generally comprises from about 50 to 90, preferably about 65 to 90, and more preferably about 70 to 85 percent by weight of magnetic pigment. The percent by weight of magnetic pigment is based on the total weight of the magnetizable layer.

For high density magnetic recording applications, it is preferred to use barium ferrite magnetic pigments in the practice of the present invention. Such pigments are most typically hexagonal, platelet-shaped particles with diameter:thickness ratios in the range from 3:1 to 15:1. Because of their strong uniaxial magnetocrystalline anisotropy, which is perpendicular to the plane of the particle, even very small barium ferrite pigments, less than 0.05 microns in diameter, show relatively high coercivity values. Moreover, the pigments are very stable, chemically. Barium ferrite pigments have been described, for example, in U.S. Pat. Nos. 4,886,714; 4,820,433; 4,778,734; 4,705,718; 4,699,771; 4,606,971; 4,548,801; and the like.

The cured binder of the present invention is most preferably derived from the first polymer, the second polymer and an isocyanate crosslinking agent wherein the first polymer is a vinyl chloride copolymer comprising a plurality of isocyanate crosslinkable hydroxy groups and a plurality of radiation crosslinkable groups, and the second polymer is a polyurethane polymer comprising a plurality of isocyanate crosslinkable hydroxy groups and a plurality of radiation crosslinkable groups. The isocyanate crosslinking agent is a polyfunctional isocyanate having an average functionality of at least 2 isocyanate groups per molecule. One example of a specific polyfunctional isocyanate useful as the isocyanate crosslinking agent in the practice of the present invention is a tolylene diisocyanate alcohol adduct commercially available as Mondur CB-601 from Mobay Chemical Corporation.

The isocyanate crosslinking agent is used in an amount such that the molar ratio of NCO groups from the isocyanate crosslinking agent relative to the total number of hydroxy groups from the first and second polymers is greater than 0. Preferably, the molar ratio of the NCO groups from the isocyanate crosslinking agent relative to the total number of hydroxy groups from the first and second polymers is in the range from 0.3 to 3.0, more preferably 1.3 to 2.0, and most preferably is about 1.8.

Preferred polyurethane polymers of the present invention have a hydroxy equivalent weight of 1000 to 10,000, more preferably 1700, and have an equivalent weight of the radiation crosslinkable groups of from 1500 to 20,000, more preferably 7500. Preferred polyurethane polymers of the present invention also have a weight average molecular weight in the range from 5000 to 100,000, and more preferably from 10,000 to 50,000. It is also preferred that the polyurethane polymers of the present invention have a number average molecular weight in the range from 2000 to 50,000, and more preferably 4000 to 20,000.

One particularly preferred polyurethane polymer of the present invention (hereinafter referred to as the "Preferred Polyurethane") is derived from a diisocyanate, a chain extender, a polydiol, a triol, and a (meth)acrylate functional diol. As used herein with respect to the (meth)acrylate functional diol, the term "(meth)acrylate" includes acrylate, methacrylate, acrylamide, and methacrylamide moieties.

Examples of diisocyanates suitable for preparing the Preferred Polyurethane of the present invention may be characterized by the formula

OCN-R₁-NCO

wherein R₁ is a divalent, organic linking group. The nature of the linking group R₁ is not critical in the practice of the present invention, so long as R₁ is substantially unreactive to isocyanate groups, amine groups, and OH groups under the reaction conditions employed to react the diisocyanate with the other reactants used to prepare the Preferred Polyurethane. It is also preferred that R₁ is stable upon exposure to ionizing radiation. "Stable" means that the linking group undergoes substantially no scission or crosslinking reactions when exposed to radiation. Examples of structures suitable for R₁ include substituted or unsubstituted straight chain, branched chain, or cyclic alkylene, arylene, aralkylene, alkoxy, acyloxy, and the like.

Preferred examples of specific diisocyanates suitable in the practice of the present invention include isophorone diisocyanate; methylene-bis-(4-cyclohexylisocyanate); tetramethylene diisocyanate; 1,3- and 1,4- cyclohexyl diisocyanate; 1,6-hexamethylene diisocyanate; isomers of tetramethylxylene diisocyanate; and the like. Of these materials, methylene-bis-(4-cyclohexyl-isocyanate) is preferred. This compound is more commonly referred to as "H₁₂MDI" and has the formula

OCN-C₆H₁₀-CH₂-C₆H₁₀-NCO

Examples of chain extenders suitable for making the Preferred Polyurethane of the present invention include dinucleophiles having a molecular weight of about 200 or less that are capable of reacting with the diisocyanate to form part of the hard segments of the Preferred Polyurethane. Examples of chain extenders suitable in the practice of the present invention may be characterized by the formula

X-R₂-Y

wherein R₂ is a divalent, organic linking group. The nature of the linking group R₂ is not critical in the practice of the present invention, so long as R₂ is substantially unreactive to isocyanate groups, amine groups, and OH groups under the reaction conditions employed to react the chain extender with the other reactants used to prepare the Preferred Polyurethane. It is also preferred that R₂ is stable upon exposure to ionizing radiation. "Stable" means that the linking group undergoes substantially no scission or crosslinking reactions when exposed to radiation. Examples of structures suitable for R₂ include substituted or unsubstituted straight chain, branched chain, or cyclic alkylene, arylene, aralkylene, alkoxy, acyloxy, and the like. Each of X and Y is independently a hydroxy, carboxy, amino, or mercapto moiety, or the like.

Preferably the chain extender is a short-chain diol such as ethylene diol, propylene diol, butane diol, 1,6-hexane diol, 2-ethylhexane diol, 2-butene-1,4-diol, diethylene glycol, 1,4-cyclohexanedimethanol, and the like. Of these materials, 1,4-cyclohexanedimethanol is most preferred.

Polydiols suitable for making the Preferred Polyurethane of the present invention include diols that have a molecular weight of at least 200, and more preferably have a molecular weight in the range from 500 to 3000. Examples of polydiols suitable in the practice of the present invention may be characterized by the formula

HO-R₃-OH

wherein R₃ is a divalent, organic linking group. The nature of the linking group R₃ is not critical in the practice of the present invention, so long as R₃ is substantially unreactive to isocyanate groups, amine groups, and OH groups under the reaction conditions employed to react the polydiol with the other reactants used to prepare the Preferred Polyurethane. It is also preferred that R₃ is stable upon exposure to ionizing radiation. "Stable" means that the linking group undergoes substantially no scission or crosslinking reactions when exposed to radiation. Examples of structures suitable for R₃ include substituted or unsubstituted straight chain, branched chain, or cyclic alkylene, arylene, aralkylene, alkoxy, acyloxy, and the like. The Preferred Polyurethane contains 20 to 80, and more preferably 40 to 60, weight percent of the polydiol.

Preferred examples of suitable polydiols include polyester diols, polycaprolactone diols, polycarbonate diols, polydimethylsiloxane diols, polyether diols, polyolefin diols, and the like. Representative polyester diols include polyester diols prepared by the polymerization of an aliphatic dicarboxylic acid or anhydride with a glycol. Examples of aliphatic dicarboxylic acids include, for example, adipic acid, succinic acid, pimelic acid, suberic acid, azelaic acid, sebacic acid, and the like or their anhydrides. The phthalic acids and their anhydrides are also useful in the practice of the present invention. The glycols used in the preparation of the polyesters include aliphatic diols containing between 2 and 10 carbon atoms, usually 2 to 6 carbon atoms, such as ethylene glycol, propylene glycol, butane diol, hexamethylene diol, decamethylene diol, 2-ethylhexane diol, 1,6-neopentyl diol, and the like.

Representative polyether diols, also referred to as poly(alkylene oxides), are essentially hydroxylcontaining compounds having ether linkages. Examples of polyether diols include hydroxyl-terminated poly(propylene oxide), hydroxyl-terminated poly(tetramethylene oxide), hydroxyl-terminated poly(pentamethylene oxide), hydroxyl-terminated poly(hexamethylene oxide), hydroxyl-terminated poly(ethylene oxide), hydroxyl-terminated poly(1,2-propylene oxide), hydroxyl-terminated poly(1,2-butylene oxide), tetrahydrofuran, ethylene oxide copolyethers, and the like.

A particularly useful class of polydiols is the class of hydroxyl-terminated poly(tetramethylene oxide) diols commercially available under the tradename Terathane from E.I. du Pont de Nemours & Co., Inc. These polydiols have molecular weights ranging from about 600 to about 3000 and may be represented by the formula:

H-(OCH₂CH₂CH₂CH₂)ₓ-OH.

Triols suitable for preparing the Preferred Polyurethane may be of a variety of types. Examples of suitable triols may be characterized by the formula 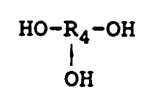 wherein R₄ is a trivalent, organic linking group. The nature of the linking group R₄ is not critical in the practice of the present invention, so long as R₄ is substantially unreactive to isocyanate groups, amine groups, and OH groups under the reaction conditions employed to react the triol with the other reactants used to prepare the Preferred Polyurethane. It is also preferred that R₄ is stable upon exposure to ionizing radiation. "Stable" means that the linking group undergoes substantially no scission or crosslinking reactions when exposed to radiation. Examples of structures suitable for R₄ include substituted or unsubstituted straight chain, branched chain, or cyclic alkylene, arylene, aralkylene, alkoxy, acyloxy, and the like.

Preferred examples of suitable triols include glycerol, trimethylol propane, low molecular weight oligomers of ethylene oxide and propylene oxide, polycaprolactone triols, and the like. Of these materials, trimethylol propane is preferred.

(Meth)acrylate functional diols suitable for preparing the Preferred Polyurethane provide (meth)acrylate moieties that are readily available and reactive for crosslinking upon exposure to a suitable source of ionizing radiation, e.g., Co-60 gamma radiation, ultraviolet radiation or electron beam radiation. Examples of suitable (meth)acrylate functional diols include (meth)acrylate functional ester diols, (meth)acrylate functional urea diols, (meth)acrylate functional acrylamide diols, and the like. Specific examples of such compounds include the following:
(a) (meth)acrylate-functional ester diols of the formula 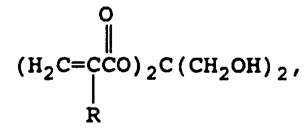 wherein
   R of this formula is H or an alkyl group having 1-6 carbon atoms;
(b) (meth)acrylate-functional urea diols of the formula 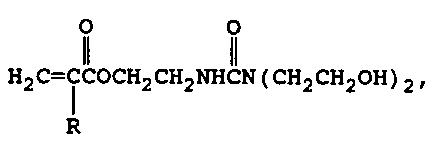 wherein
   R of this formula is H or an alkyl group having 1-6 carbon atoms;
(c) (meth)acrylate-functional urea diols of the formula 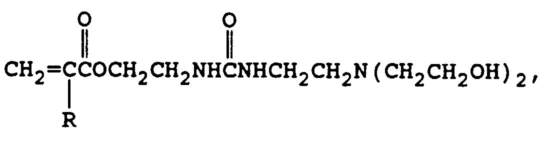 wherein R of this formula is H or an alkyl group having 1-6 carbon atoms; and
(d) (meth)acrylate-functional diols of the formula 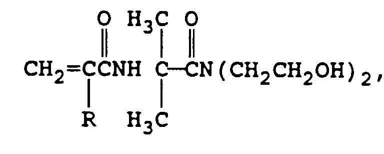 wherein
   R of this formula is H or an alkyl group having 1-6 carbon atoms.

Particularly preferred (meth)acrylate-functional diols include a diol of the formula 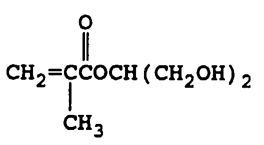 hereinafter referred to as "2-glyceryl methacrylate", and a diol of the formula 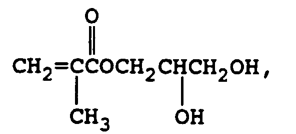 hereinafter referred to as "1-glyceryl methacrylate". Polyurethane polymers incorporating 2-glyceryl methacrylate have been described in U.S. Pat. No. 4,786,657.

When preparing the Preferred Polyurethane, the diisocyanate is used in an amount such that the ratio of NCO groups from the diisocyanate to the total number of OH groups from the chain extender, the polydiol, the triol, and the (meth)acrylate functional diol is less than 1, and more preferably is in the range from 0.75 to 0.86. In the practice of the present invention, the nucleophilic moieties of the chain extender, e.g., the moieties given by X or Y in the formula X-R₂-Y, are deemed to be hydroxy groups for purposes of calculating this ratio.

According to one preferred technique of making the Preferred Polyurethane, the diisocyanate, the chain extender, the polydiol, the triol, and the (meth)acrylate functional diol are combined with a suitable, nonaqueous solvent and allowed to react at the reflux temperature of the solvent. The amount of solvent used is not critical so long as a sufficient amount of the solvent is used so that substantially all of the reactants dissolve in the solvent. Generally, using a sufficient amount of solvent such that the reaction mixture contains 30 to 60 weight percent of solvent has been found to be suitable in the practice of the present invention. A catalyst such as dibutyltindilaurate may be added to the reaction mixture in order to accelerate the reaction. Generally, using 0.1 to 1 parts by weight of the catalyst based on 100 parts by weight of the Preferred Polyurethane has been found to be suitable in the practice of the present invention. The progress of the reaction may be monitored by measuring the IR absorption (2250 cm⁻¹) of the NCO groups from the diisocyanate. The reaction is deemed to be complete when an IR absorption for these NCO groups can no longer be detected.

In order to minimize the amount of water that is present in the reaction mixture, it is preferred that the chain extender, the polydiol, and the triol are dried before being combined with the other reactants. The particular technique used to dry the chain extender, the polydiol, and the triol is not critical and may be any suitable drying technique known in the art. As one example of a drying technique, a solution is prepared by dissolving the chain extender, the polydiol, and the triol in a solvent that is capable of forming an azeotrope with water. Next, a portion of the solution is distilled off in order to azeotropically dry the alcohols. Generally, distilling off about 10 parts by weight of the solution based on 100 parts by weight of solvent has been found to be suitable in the practice of the present invention. After distilling off a portion of the solution, the diisocyanate, the (meth)acrylate functional diol, optionally additional solvent, and optionally a catalyst may then be added to the solution.

Examples of suitable solvents for azeotropically drying the chain extender, the polydiol, and the triol include tetrahydrofuran and toluene. Examples of suitable solvents for carrying out the reaction between the diisocyanate, the chain extender, the polydiol, the triol, and the (meth)acrylate functional diol include these same solvents.

Preferred vinyl chloride copolymers of the present invention typically have a vinyl chloride content in the range from 50 to 97, more preferably 75 to 85, weight percent and have a weight average molecular weight in the range from 80,000 to 95,000 and have a number average molecular weight in the range from 21,000 to 33,000. Particularly preferred vinyl chloride copolymers of the present invention are obtained from reactants comprising:
(a) 50 to 97 weight percent of chain segments of the formula 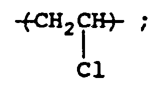
(b) 0 to 30 weight percent of chain segments of the formula 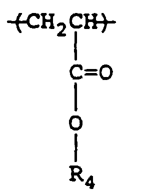 wherein R₄ is an alkyl group of 1 to 10 carbon atoms;
(c) 0.1 to 20 weight percent of chain segments of the formula 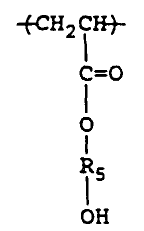 wherein R₅ is an alkylene moiety of 1 to 10 carbon atoms; and
(d) 0.1 to 20 weight percent of chain segments of the formula 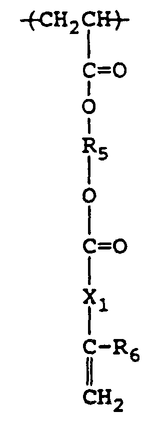 wherein R₅ is as defined above, R₆ is H or an alkyl group of 1 to 10 carbon atoms, and X₁ is a linking group that is stable upon exposure to ionizing radiation. "Stable upon exposure to ionizing radiation" means that the linking group is resistant to scission or crosslinking reactions when exposed to ionizing radiation.

Examples of linking groups suitable in the practice of the present invention include 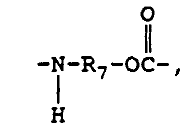 wherein R₇ is an alkylene moiety having 1-12 carbon atoms; a cycloalkylene moiety having 5-8 carbon atoms; 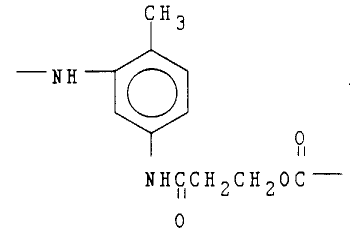 and 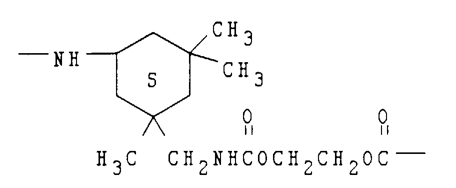 Most preferably, R₄ is -(CH₂)₃CH₃; R₅ is -CH₂CHCH₃; R₆ is -CH₃; and X₁ is 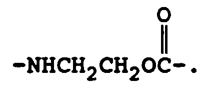 The particularly preferred vinyl chloride copolymers of the present invention and their synthesis have been fully described in U.S. Patent No. 4,783,370, incorporated herein by reference.

In addition to the isocyanate crosslinking agent, the first and second polymers, and the magnetic pigment, the magnetizable layer of the present invention may also comprise one or more conventional additives such as lubricants; abrasives; thermal stabilizers; antioxidants; dispersants; wetting agents; antistatic agents; fungicides; bactericides; surfactants; coating aids; nonmagnetic pigments; and the like in accordance with practices known in the art.

A particularly preferred class of dispersants includes radiation curable dispersants which comprise at least one radiation crosslinkable moiety and at least one dispersing moiety selected from -SO₃M, -OSO₃M, -COOM, and 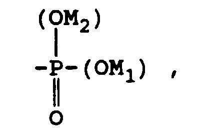 wherein M is H, Li, K, Na, or NH₄; and M₁ and M₂ are independently H, Li, Na, K, NH₄, or a lower alkyl group having 1-6 carbon atoms. Advantageously, these dispersants are capable of crosslinking with the other radiation curable binder materials when exposed to ionizing radiation.

Preferred radiation curable dispersants are exemplified by the formula 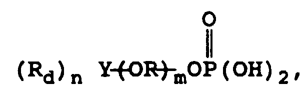 wherein:
R_{d} is a moiety comprising a radiation crosslinkable group;
n is 1 to 3 and those bond sites on Y not occupied by R_{d} are occupied by -H or -RₑoH, wherein Rₑ is a straight chain or branched alkyl moiety of 1 to 30 carbon atoms;
m is 1 to 10, preferably 1 to 5; and
Y is a straight chain, cyclic, or branched aliphatic, aromatic, or alicyclic hydrocarbon moiety of 1 to 30 carbon atoms.

A specific example of a particularly preferred radiation curable, phosphorylated ester dispersant has the formula 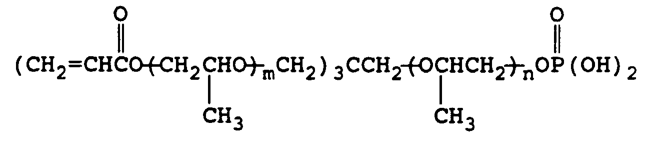 wherein m is 1 to 10 and n is 1 to 10. Such preferred radiation curable dispersants and their preparation have been fully described in U.S. Patent No. 4,663,184, incorporated herein by reference.

Another preferred class of dispersing agents include phosphorylated polyoxyalkyl polyols exemplified by the formula: 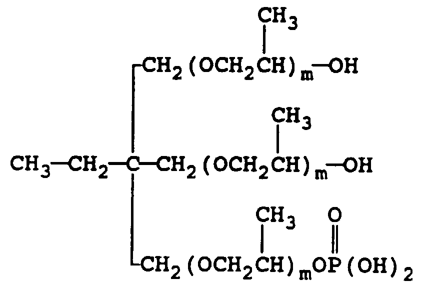 In the above formula, m is an integer from 1 to 5. Phosphorylated polyoxyalkyl polyols have been described, for example, in U.S. Pat. No. 4,889,895.

Other preferred dispersing agents include the Emcol dispersing agents such as Emcol Chloride, Emcol Phosphate, and Emcol Acetate available from Witco Chemical, Organics Division, New York, New York. The Emcol compounds are polypropoxylated quaternary ammonium based cationic surfactants exemplified by the following formula: 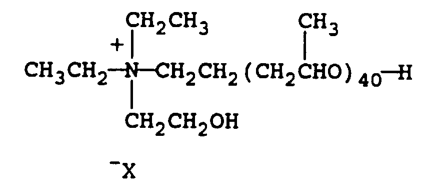 In the above formula, X may be phosphate, acetate, or chloride.

The dispersing agent, if any, may be used singly or in combination with other dispersing agents. Preferably, 1 to 10 parts by weight, more preferably 4 to 7 parts by weight of the dispersing agent or combination of dispersing agents are used per 100 parts by weight of magnetic pigment.

According to one preferred technique of preparing magnetic recording media of the present invention, ingredients comprising the magnetic pigment, the first polymer, and a solvent are milled in a first step to form a magnetic dispersion. Optionally, the ingredients that are milled in this first step may also include a dispersant, a stabilizer to reduce the reactivity of the radiation crosslinkable groups of the first polymer, and all or a portion of a head cleaning agent. The head cleaning agent, if any is used, may be separately milled in a solvent to a desired size, number density, and size distribution before being combined and then milled with the other ingredients of the magnetic dispersion.

An advantage of milling in the presence of only the first polymer is that the amount of solvent required for milling is minimized. For example, magnetic dispersions of the present invention suitable for milling may contain only 40 to 60 weight percent, and more preferably 45 to 50 weight percent, of solvent.

Most preferably the solvent used for milling is an admixture of tetrahydrofuran ("THF") and a stabilizing amount of butylated hydroxytoluene ("BHT"). As is known in the art, the BHT is added to the THF as a free radical scavenger in order to reduce the tendency of the THF to form peroxides. In the practice of the present invention, it is believed that the BHT also helps to reduce the reactivity of the radiation crosslinkable groups of the first polymer during milling. As used hereinafter, the term "THF" shall mean tetrahydrofuran with a stabilizing amount of BHT. It is generally desirable to avoid the use of ketone solvents during milling. Presence of ketone solids during milling tends to result in magnetic recording media characterized by high friction and stiction. Milling is preferably accomplished using ceramic milling media.

Next, in a second step, additional amounts of the first polymer if desired, the second polymer, the isocyanate crosslinking agent and optionally additional solvent are blended into the magnetic dispersion under laminar shear conditions. Optionally, other conventional additives may also be added to the dispersion in this second step.

Preferably, a sufficient amount of additional solvent is added to the magnetic dispersion during this second step such that the resulting magnetic dispersion contains 50 to 80 weight percent solvent. Examples of suitable solvents that may be added during this second step include THF, methyl ethyl ketone, cyclohexanone, and the like. Most preferably, however, the additional solvent is a mixture of THF and cyclohexanone. Although the use of ketone solvents such as cyclohexanone is undesirable during the first milling step, cyclohexanone may be advantageously added during the second blending step in order to reduce the drying rate of the magnetic dispersion. Generally, a slower drying dispersion provides a smoother magnetic coating. Preferably, a sufficient amount of cyclohexanone is used such that the total amount of solvent added during the first and second steps contains 5 to 15 weight percent cyclohexanone. Greater amounts of cyclohexanone may plasticize or leave an unpleasant odor in the resulting magnetizable layer. On the other hand, if lesser amounts of cyclohexanone are used, the magnetic dispersion may dry too fast.

When adding the additional ingredients under laminar shear conditions, the optimum rate of laminar shear may generally be determined by using the "roar" procedure. According to this procedure, the shear rate is slowly increased until a "roar" can audibly be heard coming from the dispersion as the dispersion is mixed. This "roar" indicates that air is becoming entrapped in the dispersion. The optimum shear rate is then obtained by lowering the shear rate until the "roar" just disappears. As the additional ingredients are added, the shear rate may need to be adjusted from time to time to maintain the optimum shear rate.

After blending the additional reactants into the magnetic dispersion, the magnetic dispersion is then coated onto a nonmagnetizable support. The dispersion may be applied to the nonmagnetizable support using any conventional coating technique, such as gravure coating techniques, reverse gravure coating techniques, or knife coating techniques. The coated support may then be passed through a magnetic field to orient the magnetic pigment, after which the coating is dried, calendered and then cured with ionizing radiation.

Radiation curing may be achieved using any type of ionizing radiation, e.g., Co-60 gamma radiation, electron beam radiation, or ultraviolet radiation, in accordance with practices known in the art. Preferably, radiation curing is achieved using 1 to 10 Mrads, and more preferably 6 to 8 Mrads, of electron beam radiation having an energy in the range from 125 to 400 keV, preferably 160 to 190 keV. Although electron beam irradiation can occur under ambient conditions or in an inert atmosphere, it is preferred to use an inert atmosphere as a safety measure in order to keep ozone levels to a minimum and to increase the efficiency of curing. "Inert atmosphere" means an atmosphere comprising flue gas, nitrogen, or a noble gas and having an oxygen content of less than 500 parts per million ("ppm"). A preferred inert atmosphere is a nitrogen atmosphere having an oxygen content of less than 75 parts per million.

As soon as the isocyanate crosslinking agent is added to the dispersion, the NCO groups of the isocyanate crosslinking agent will begin to crosslink with the hydroxy groups of the polyurethane polymer and the vinyl chloride copolymer. Preferably, a catalyst may also be added in suitable catalytic amounts to the dispersion during the second blending step in order to facilitate this crosslinking reaction. Although the catalyst may be any catalyst known in the art for catalyzing the reaction of NCO moieties with hydroxy moieties, a particularly preferred catalyst is dibutyltindiacrylate (hereinafter "DBTDA"). Generally, using from 0.02 to 0.2 parts by weight of DBTDA per 100 parts by weight of magnetic pigment has been found to be suitable in the practice of the present invention.

Advantageously, the DBTDA catalyst not only facilitates the crosslinking reaction between the NCO moieties and the hydroxy moieties, but, upon exposure to ionizing radiation, also is capable of crosslinking with the other radiation curable binder materials. When crosslinked with the other radiation crosslinkable binder materials, DBTDA not only shows significantly less of a tendency to exude from the magnetizable layer over time relative to other catalysts, but also provides a magnetizable layer with improved modulus. As another advantage, DBTDA also solves another problem previously associated with vinyl chloride copolymers. Our investigations have shown that vinyl chloride copolymers tend to undergo dehydrochlorination upon exposure to ionizing radiation, e.g., electron beam radiation. The presence of DBTDA in the magnetic dispersion substantially reduces the tendency of the vinyl chloride copolymer to undergo dehydrochlorination upon irradiation relative to magnetic dispersions having no DBTDA.

DBTDA can be synthesized by refluxing a mixture of acrylic acid and dibutyltinoxide in toluene and then removing the water side-product by azeotropic distillation.

This reaction may be represented by the following reaction scheme:

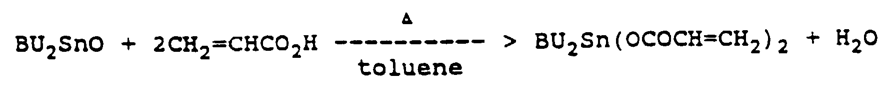

An alternative embodiment of the present invention is a magnetic recording medium comprising a nonmagnetizable support having first and second major surfaces. A magnetizable layer is provided on the first major surface, and a backside coating is provided on the second major surface. The backside coating comprises a cured polymeric binder obtained from binder materials comprising the first and second polymers and optionally the isocyanate crosslinking agent as described above. Advantageously, backside coatings of the present invention may be cured using isocyanate curing techniques, radiation curing techniques, or both isocyanate and radiation curing techniques.

In addition to the first polymer, the second polymer, and the isocyanate crosslinking agent, backside coatings of the present invention may also comprise one or more conventional additives such as lubricants; abrasives; thermal stabilizers; antioxidants; dispersants; wetting agents; antistatic agents; fungicides; bactericides; surfactants; coating aids; nonmagnetic pigments; and the like in accordance with practices known in the art.

In a particularly preferred embodiment of the present invention, each of the magnetizable layer and the backside coating comprise a cured polymeric binder obtained from binder materials comprising the first and second polymers, the magnetizable layer additionally and the backside coating optionally comprising the isocyanate crosslinking agent as described above.

A preferred embodiment of the present application is
A) a magnetic recording medium, comprising a nonmagnetizable support having first and second major surfaces, a magnetizable layer provided on the first major surface of the support, and a backside coating provided on the second major surface of the support,
wherein the backside coating comprises a cured binder, said cured binder being derived from binder materials comprising;
(a) a first polymer having a Tg of about 60°C or more, wherein said first polymer comprises a plurality of isocyanate crosslinkable hydroxy groups and a plurality of radiation crosslinkable groups; and
(b) a second polymer having a Tg of about 25°C or less, wherein said second polymer comprises a plurality of isocyanate crosslinkable hydroxy groups and a plurality of radiation crosslinkable curable groups, wherein the weight ratio of the second polymer to the first polymer is in the range from 1:19 to 19:1.

Further preferred is
B) the magnetic recording medium of item A) above, wherein the first polymer is a vinyl chloride copolymer, and the second polymer is a polyurethane polymer.

Further preferred is
C) the magnetic recording medium of item A) above, wherein the binder materials further comprise an amount of a radiation curable dispersant effective to help disperse the magnetic pigment in the cured binder, wherein the radiation curable dispersant comprises at least one radiation crosslinkable moiety and at least one dispersing moiety selected from the group consisting of -SO₃M, -OSO₃M, -COOM, and 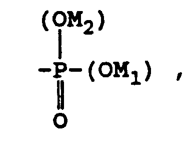 wherein M is H, Li, K, Na, or NH₄; and M₁ and M₂ are independently H, Li, Na, K, NH₄, or a lower alkyl group having 1-6 carbon atoms.

Further preferred is
D) the magnetic recording medium of item C) above, wherein the radiation curable dispersant has the formula 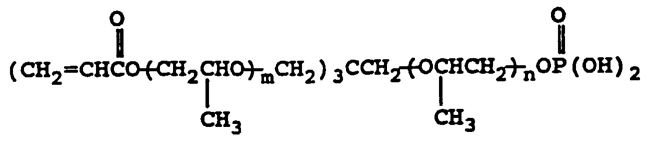 wherein m is 1-10 and n is 1-10.

The present invention will now be further described with regard to the following examples.

### EXAMPLE 1

This example describes the preparation of a polyurethane polymer of the present invention. A 3-liter split resin flask was equipped with an overhead mechanical stirrer, a thermometer, a distillation head with collection flask, and a stopper. The distillation head was equipped with a N₂ inlet line in order to maintain the reaction mixture under an inert atmosphere. The flask was charged with 52.50 g of 1,4-cyclohexanedimethanol, 25.58 g of glycerol, 424.70 g of polydiol (Terathane 1000), and 1866.30 g of THF. The mixture was heated to reflux with stirring and 222.39 g of THF was distilled off in order to azeotropically dry the polyol mixture. After cooling the solution to 40°C, 18.20 g of glyceryl methacrylate, 279.82 g of 1,1-methylene bis(4-isocyanatocyclohexane) and 12 drops of dimethyltin dilaurate were added to the reaction flask. The solution was heated to reflux and held at reflux for 2 hours, at which time a trace of residual isocyanate was detectable by infrared analysis. An additional 30.76 g 1,1-methylene bis(4-isocyanatocyclohexane) was added to the solution. The solution was heated to reflux and held at reflux for 30 minutes, then cooled to room temperature and held at room temperature with stirring overnight. The resulting polyurethane polymer had an inherent viscosity in THF of 0.42 dl/l, a Tg of -1.6°C, a number average molecular weight of 10,889, a weight average molecular weight of 125,986, and a polydispersity of 11.57.

### EXAMPLE 2

This example describes the preparation of a vinyl chloride copolymer of the present invention. 150 grams of a terpolymer of vinyl chloride, hydroxypropylacrylate, and butylacrylate (obtained as Vinnol E22-48A from Wacker-Chemie) was added to 450 grams of THF in a 4-neck flask. This mixture was mechanically stirred while being heated to 70°C to dissolve all of the terpolymer. Next, 15% of the solvent was removed by azeotropic distillation at 80°C to further dehydrate the solution. The temperature was then lowered to 70°C, and the following reagents were added sequentially: 0.15 grams of phenothiazine, 0.11 grams dibutyltin dilaurate, and 9.0 grams of isocyanatoethyl methacrylate. The resulting reaction was maintained at 70°C under a dry nitrogen atmosphere for two hours after which the reaction was complete. The reaction product was a homogeneous solution of an acrylated resin having pendant hydroxy groups and pendant radiation curable methacrylate groups. About 30% of the hydroxyl groups of the terpolymer were methacrylated in this procedure.

### EXAMPLE 3

This example describes the preparation of a radiation curable phosphorylated ester dispersant. 1785 grams polyphosphoric acid (ppa) was added to 12.4 liter round bottom flask containing 7000 grams propoxylated partially acrylated polyol (Photomer 4171 from Diamond Shamrock Chemical Company) and 8.1 grams phenolic antioxidant. The ppa was added over a 70 minute period during which the batch temperature was controlled at about 70°-90°C. A small amount of insolubles appeared to be present during ppa addition but disappeared toward the end of the reaction. After the ppa had been completely added, the reaction flask was heated to 95°C and maintained at that temperature for 3 hours. The reaction was continued at 93°C and maintained at that temperature for 3-4 hours with agitation.

The batch was cooled to about 80°C, and 1.5 liters of deionized water were added after which about 3 liters of toluene were added. The batch was mixed for one hour and was allowed to settle. The water phase (about 1.1 liters) was decanted from the flask. One liter of water was added to the batch for a second water wash, after which the agitation was stopped, the batch was allowed to settle, and about 1.1 liters of water was decanted off.

At this point, the batch was heated to 80°C, with dry air flow through flask to remove water by distilling off the water/toluene azeotrope. The distillation was stopped, and the batch was allowed to settle overnight, after which an additional 300 ml of water was decanted off. The azeotropic distillation was begun again, resulting in the removal of 55 ml more water with the batch temperature at 95°-112°C. The batch was cooled down to near room temperature. The finished batch was clear, and 9830 grams were obtained at 77.4% solids.

### EXAMPLE 4

This example describes the preparation of DBTDA. A mixture of 24.89 grams (0.1 M) dibutyltin oxide and 13.7 cm³ (0.2M) acrylic acid was refluxed in toluene (400 cm³). After refluxing for one hour, 1.8 ml of water was separated azeotropically using a Dean Stark apparatus. Removal of solvent gave 36.1 grams (96%) of product. This was a clear, pale yellow liquid which was used without further purification.

### EXAMPLE 5

A magnetic dispersion was prepared from the following ingredients:

| Charge I | |
|---|---|
| Ingredient | Parts by Weight |
| THF | 16 |
| Dispersant solution (Radiation curable phosphorylated ester dispersant from Example 3 at 75% solids in Toluene) | 2.0 |
| Aromatic phosphite antioxidant** | 0.01 |
| Vinyl chloride copolymer solution (Vinyl chloride copolymer from Example 2 at 30 % solids in THF) | 10 |
| Magnetic oxide | 25 |
| Alumina | 1.5 |
| Propyl Gallate stabilizer | 0.01 |

| | |
|---|---|
| **antioxidant commercially available as Irgaphos 168 from Ciba-Geigy Corp. | |

The THF, the aromatic phosphite, the dispersant solution, and the vinyl chloride copolymer solution were combined and mixed in a large blade mixer for 15 minutes at 1500 rpm. The magnetic oxide and the alumina were added, and mixing continued for an additional 2 hours at 2000 rpm. The propyl gallate was then added and mixing continued for an additional 30 to 60 minutes at 2000 rpm. The mixed ingredients were then charged to a horizontal mill and milled pass to pass until smooth using glass milling media. The resulting magnetic dispersion was first sieved in order to separate the dispersion from the milling media and then filtered to remove milling debris.

The magnetic dispersion was then combined with the following additional ingredients in the following amounts.

| Charge II | |
|---|---|
| Ingredient | Parts by Weight |
| Vinyl chloride copolymer solution (Vinyl chloride copolymer from Example 2 at 30% solids in THF) | 5 |
| Polyurethane polymer solution (Polyurethane polymer from Example 1 at 34% solids in THF) | 3.2 |
| THF | 10.5 |
| DBTDA | 0.0290 |
| Butyl Stearate | 0.3520 |
| Myristic Acid | 0.3520 |
| THF | 1.0 |
| Isocyanate crosslinking agent solution (CB-601 at 60% solids in PM Acetate) | 1.8 |

For this sample (Refence Sample 5A), the additional ingredients were slowly added to the dispersion, in the order listed, under laminar shear conditions. After the addition of the isocyanate crosslinking agent, the sample was mixed in a large blade mixer for an additional 10 minutes under laminar shear conditions. The sample was then coated onto one side of a polyethylene terephthalate ("PET") support which had been primed with a corona treatment. The other side of the PET support had a conventional backside coating in accordance with practices known in the art. See, e.g., U.S. Pat. No. 4,328,935. After coating, the sample was passed through a magnetic field for quietization. The sample was then dried, whereby a dried magnetizable layer was formed on the PET support. After drying, the magnetizable layer of the sample was calendered.

### EXAMPLE 6

A magnetic recording tape (Sample 6A) was prepared according to the procedure of Example 5, except that, after calendering, the resulting magnetic recording tape was irradiated with 7 Mrads of electron beam radiation at 175 Kev.

### EXAMPLE 7

A magnetic recording tape (Sample 7A) was prepared according to the procedure of Example 5, except that (1) after calendering, the resulting magnetic recording tape was irradiated with 7 Mrads of electron beam radiation at 175 Kev, and (2) Charge II contained the following ingredients.

| Charge II | |
|---|---|
| Ingredient | Parts by Weight |
| Vinyl chloride copolymer solution (Vinyl chloride copolymer from Example 2 at 30% solids in THF) | 8 |
| Polyurethane polymer solution (Polyurethane polymer from Example 1 at 30% solids in THF) | 3.9 |
| THF | 10.5 |
| DBTDA | 0.0290 |
| Butyl Stearate | 0.3520 |
| Myristic Acid | 0.3520 |
| THF | 1.0 |
| Isocyanate crosslinking agent solution (CB-601 at 60% solids in PM Acetate) | None |

### EXAMPLE 8

A magnetic recording media (Comparison Sample 8A) was prepared using the materials as listed below:

| **Charge A** | **Parts by Weight** |
|---|---|
| Toluene | 25.3 |
| Methyl Ethyl Ketone | 48.7 |
| Cyclohexanone | 29.3 |
| Dispersing Agent solution (phosphorylated polyoxyalkyl polyol at 75% solids in Toluene) | 4.0 |
| Dispersing Agent (quaternary ammonium acetate furnished as Emcol Acetate from Witco Chemical Co., Inc.) | 3.0 |
| Acicular, cobalt encapsulated magnetic iron oxide | 100.0 |
| **Charge B** | |
| VAGH solution (a partially hydrolyzed vinyl chloride vinyl acetate copolymer, available as VAGH from the Union Carbide Corporation, at 32% solids in methyl ethyl ketone) | 28.3 |
| Estane 5703 solution (a high molecular weight polyester polyurethane polymer, available from B. F. Goodrich Co., Inc., at 15% solids in an 80:20 mixture of methyl ethyl ketone and toluene) | 30.0 |
| Cyclohexanone | 4.0 |
| Toluene | 4.0 |
| Methyl ethyl ketone | 17.3 |
| **Charge C** | |
| Estane 5703 solution (15% solids in an 80:20 mixture of methyl ethyl ketone and toluene) | 2.7 |
| Dispersing Agent solution (phosphorylated polyoxyalkyl polyol at 75% solids in toluene) | 0.2 |
| Dispersing Agent (Emcol Phosphate available from Witco Chemical Co., Inc.) | 0.1 |
| Cyclohexanone | 3.5 |
| Aluminum Oxide Powder | 7.9 |
| **Charge D** | |
| Myristic Acid | 3.5 |
| Butyl Myristate | 1.3 |
| CB-601 solution (Isocyanate crosslinking agent at 60% solids in PM Acetate) | 9.8 |

The ingredients of charge A were combined and stirred together in a large blade mixer until a uniform mixture was obtained. To this pre-mix, Charge B was then added and mixing continued until the slurry became uniform. A dispersion suitable for coating was then obtained by milling this pre-mix in a sand mill in the presence of sand mill media. When the magnetic dispersion was judged smooth, a previously prepared dispersion made from the ingredients of Charge C was added to the magnetic dispersion. After adding Charge C, the magnetic dispersion was milled for one additional pass to obtain homogeneity. After milling, the magnetic dispersion was sieved in order to separate the magnetic dispersion from the sand mill media, filtered, and readied for coating. Just prior to coating, the ingredients of Charge D were added, and the dispersion was mixed to assure uniformity and then filtered. This magnetic dispersion was then coated to a dried down thickness of 170 to 180 microinches onto a pre-corona treated 14.0 micron thick biaxially oriented polyester film. The pre-corona treated film had previously been coated with a backcoat layer such as that known to those familiar with the art. The coated film was passed through a magnetic field in order to orient the acicular magnetic particles in the machine direction so as to optimize the longitudinal recording properties of the coating. The resulting magnetic recording tape was then heated in an oven to drive off volatile materials and calendered to provide a very smooth magnetic recording surface.

### EXAMPLE 9

The Instron modulus and flexural modulus of Reference sample 5A, Samples 6A and 7A, and Comparison Sample 8A were determined according to the primary subtraction technique. According to this technique, a sample of magnetic tape is prepared by forming a magnetizable layer on a nonmagnetizable support which does not have a backside coating. The modulus of the magnetizable layer, M_{L}, is calculated as the difference between the modulus of the magnetic tape, M_{T}, and the modulus of the uncoated nonmagnetizable support, M_{S}. That is, M_{L} = M_{T} - M_{S}.

All modulus values were measured on the Instron 1122 frame model. The caliper and width of each sample were measured and the following test parameters were set: gauge length at six inches (15 cm), cross-head speed at one inch per minute, approximate displacement of 0.76 inch (2 cm), data rate at 9 points per second and full scale load at ten pounds (4.5 kg). The modulus values were measured in the tensile mode and were determined by taking the slope of the least square fit of the longest, straightest portion of the stress-strain curve closest to the origin. The calculated modulus values along with the squareness value of each sample appear in the following table:

| Sample | Instron Modulus (x 10⁶ psi) | Flexural Modulus (x10⁶ psi) | Squareness (∅r/øm) |
|---|---|---|---|
| 5A | 1.03 (7.10 × 10³ MPa) | 1.4 (9.6 × 10³ MPa) | 0.87 |
| 6A | 1.75 (12.1 × 10³ MPa) | 2.36 (16.3 × 10³ MPa) | 0.89 |
| 7A | 1.22 (8.41 × 10³ MPa) | 1.65 (11.4 × 10³ MPa) | 0.89 |
| 8A | 1.03 (7.10 × 10³ MPa) | 1.4 (9.6 × 10³ MPa) | 0.85 |

### EXAMPLE 10

A polyurethane polymer of the present invention was prepared as follows. A 3-liter split resin flask was equipped with an overhead mechanical stirrer, a thermometer, a distillation head with a collection flask, and a stopper. The distillation head was equipped with a N₂ inlet line in order to maintain the reaction mixture under an inert atmosphere. The flask was charged with 2.46 parts by weight of 1,4-cyclohexanedimethanol, 1.96 parts by weight of trimethylolpropane, 22.2 parts by weight of Terathane 1000, and 76.0 parts by weight of THF. The mixture was heated to reflux with stirring, and about 15% of the THF was distilled off in order to azeotropically dry the polyol mixture. After cooling the mixture to 40°C, 0.95 parts by weight glyceryl methacrylate, 14.2 parts by weight 1,1-methylene bis (4-isocyanatocyclohexane), and 0.01 parts by weight dibutyltin dilaurate were added to the reaction flask. The solution was heated to reflux and held at reflux for 2 hours. The resulting polyurethane polymer had an inherent viscosity in THF of 0.35, a Tg of -29°C, a number average molecular weight of 11,000, a weight average molecular weight of 31,000, a polydispersity of 2.8, an OH equivalent weight of 1,600, and a methacrylate equivalent weight of 7,000.

### EXAMPLE 11

A magnetic dispersion was prepared from the following ingredients:

| Charge I | |
|---|---|
| Ingredient | Parts by Weight |
| THF | 78.5 |
| Propyl gallate | 0.02 |
| Dispersant solution (Radiation curable phosphorate Ester dispersant from Example 3 at 66% solids in Toluene) | 9.1 |
| Barium Ferrite | 100.0 |
| Alumina | 2.95 |
| Vinyl chloride copolymer solution (Vinyl chloride copolymer from Example 2 at 30% solids in THF) | 12.0 |
| Additional THF | 15.5 |

The THF and the dispersant solution were combined in a large blade mixer and mixed for 15 minutes at 1500 rpm. Next, the magnetic oxide and the alumina were slowly added, and mixing continued for an additional 3 hours at 3000 rpm. The vinyl chloride copolymer solution and propyl gallate were then added and mixing continued for an additional 60 minutes at 3000 rpm. The contents of the mixer were then mixed under high shear for 30 minutes. Just prior to charging the contents of the mixer into a horizontal mill, the additional THF was added. The batch was then charged to a horizontal mill and milled pass to pass until smooth using ceramic milling media. The resulting magnetic dispersion was first sieved in order to separate the dispersion from the milling media and then filtered to remove milling debris.

The magnetic dispersion was then combined with the following additional ingredients in the following amounts:

| Charge II | |
|---|---|
| Ingredient | Parts by Weight |
| Polyurethane polymer solution (Polyurethane polymer from Example 10 at 35% solids in THF) | 6.7 |
| Myristic Acid | 1.5 |
| Butyl Stearate | 0.63 |
| THF | 28.0 |
| Cyclohexanone | 11.9 |
| DBTDA | 0.14 |
| Isocyanate crosslinking agent solution (CB-601 at 60% solids in PM acetate) | 2.0 |

For this sample (Sample 11A), the ingredients were slowly added to the sample, in the order listed, under laminar shear conditions. After the addition of the last ingredient, the sample was mixed in a large blade mixer for an additional 15 minutes under laminar shear conditions. The sample was then coated onto one side of a polyethylene terephthalate ("PET") support. The other side of the PET support had a conventional backside coating in accordance with practices known in the art. See, for example, U.S. Pat. No. 4,328,935. After coating, the sample was passed through a magnetic field for quietization. The sample was then dried, whereby a dried magnetizable layer was formed on the PET support. After drying, the magnetizable layer of the sample was calendered and then irradiated with 8 Mrads of electron beam radiation at 175 Kev. The Instron modulus and flexural modulus of the resulting magnetic recording tape were then determined according to the primary subtraction technique. The results are reported in the following table:

| Instron Modulus (x 10⁶ psi) | Flexural Modulus (x 10⁶ psi) |
|---|---|
| 0.586 (4.04 x 10³ MPa) | 0.791 (5.45 x 10³ MPa) |

### EXAMPLE 12

This example describes the preparation of a polyurethane polymer (Sample 12A) having hydroxy groups and radiation crosslinkable methacrylate groups. A 3-liter split resin flask was equipped with an overhead mechanical stirrer, a thermometer, a distillation head with collection flask, and a stopper. The distillation head was equipped with a N₂ inlet line in order to maintain the reaction mixture under an inert atmosphere. The flask was charged with 39.90 grams of 1,4-cyclohexanedimethanol (hereinafter "CHDM"), 19.44 grams of glycerol, 322.77 grams of polydiol (Terathane 1000), and 1418.40 grams of THF. The mixture was heated to reflux with stirring, and 164 grams of THF was distilled off in order to azeotropically dry the polyol mixture. After cooling the mixture to 60°C, 13.83 grams of glyceryl methacrylate, 212.46 grams of 1,1-methylene bis(4-isocyanatocyclohexane) (hereinafter "HMDI"), and 9 drops of dimethyltin dilaurate were added to the reaction flask. The solution was heated to reflux and held at reflux for 2 hours, at which time no residual isocyanate was detectible by infrared analysis.

The resulting polyurethane polymer had an inherent viscosity in THF of 0.33 dl/g, a Tg of -14.6°C, a number average molecular weight of 10,049, a weight average molecular weight of 41,057, a dispersity of 4.09, an OH equivalent weight of 1538, and a methacrylate equivalent weight of 7047.

### EXAMPLE 13

A polyurethane polymer (Sample 13A) having hydroxy groups and radiation crosslinkable methacrylate groups was prepared according to the procedure of Example 12, except that the polyurethane polymer contained 27.4 weight percent HMDI, 3.1 weight percent glycerol, 2.3 weight percent glyceryl methacrylate, and 67.2 weight percent of Terathane 1000.

The resulting polyurethane polymer had an inherent viscosity in THF of 0.41 dl/g, a Tg of -50°C, a number average molecular weight of 11,059, a weight average molecular weight of 46,562, a dispersity of 4.21, an OH equivalent weight of 1742, and a methacrylate equivalent weight of 7020.

### EXAMPLE 14

A polyurethane polymer (Sample 14A) having hydroxy groups and radiation crosslinkable methacrylate groups was prepared according to the procedure of Example 12, except that the polyurethane polymer contained 34.9 weight percent HMDI, 4.8 weight percent CHDM, 3.1 weight percent glycerol, 4.2 weight percent glyceryl methacrylate, and 53.0 weight percent Terathane 1000.

The resulting polyurethane polymer had an inherent viscosity in THF of 0.44 dl/g, a Tg of -17°C, a number average molecular weight of 9383, a weight average molecular weight of 38,336, a dispersity of 4.09, an OH equivalent weight of 1627, and a methacrylate equivalent weight of 3823.

### EXAMPLE 15

A polyurethane polymer (Sample 15A) having hydroxy groups and radiation crosslinkable methacrylate groups was prepared according to Example 12, except that the polyurethane polymer contained 45.6 weight percent HMDI, 15.7 weight percent CHDM, 3.1 weight percent glycerol, 2.3 weight percent glyceryl methacrylate, and 33.3 weight percent Terathane 1000.

The resulting polyurethane polymer had an inherent viscosity in THF of 0.32 dl/g, an OH equivalent weight of 1473, and a methacrylate equivalent weight of 6963.

### EXAMPLE 16

Magnetic recording tapes were prepared using the polyurethane polymers of Examples 12 through 15. For each sample, a magnetic dispersion was prepared from the following ingredients:

| Ingredient | Parts by Weight Solids |
|---|---|
| Magnetic oxide | 100 |
| Radiation curable dispersant with a phosphate group* | 4 |
| Emcol Phosphate (Witco Chemical Co. | 2.5 |
| Alumina | 2 |
| Carbon Black | 5 |
| Vinyl Chloride Copolymer of Example 2 (30% solids in THF) | 12.5 |
| Polyurethane polymer (33% solids in THF) | 3.1 |
| Myristic acid | 1 |
| Butyl stearate | 2 |
| THF | 308.2** |

| | |
|---|---|
| * DeSoto 150 available from DeSoto, Inc. | |
| ** Total parts by weight of THF added, including THF added with the vinyl chloride copolymer and the polyurethane polymer. | |

The ingredients were combined and milled until smooth. Portions of the resulting magnetic dispersions were coated onto various PET supports and each coated sample was irradiated with an amount of electron beam radiation of 2, 3, 5 or 7 Mrads.

### EXAMPLE 17

A magnetic recording medium (Comparison Sample 17A) was prepared in accordance with Example 16, except that a commercially available methacrylated polyurethane polymer having no OH groups (Desoto 151 available from DeSoto, Inc.) was substituted for the polyurethane polymer of the present invention.

### EXAMPLE 18

The Young's modulus values of the magnetic coatings prepared in Examples 16 and 17 were determined and the results are shown in the following table.

| Electron Beam Dosage | Young's Modulus (KPSI) | | | | |
|---|---|---|---|---|---|
| | 12A | 13A | 14A | 15A | 17A |
| 2 | 65 | 40 | 40 | 70 | 35 |
| 3 | 90 | 95 | 85 | 120 | 90 |
| 5 | 150 | 120 | 160 | 180 | 100 |
| 7 | 260 | 150 | 245 | 270 | 180 |

### EXAMPLE 19

Dispersions containing 100 parts of the vinyl chloride copolymer of Example 2 (20% solids in THF), and 5 parts DBTDA were coated onto a PET support. The coatings were dried and then cured with 1, 2, 3, 5, or 7 Mrads of electron beam radiation. For comparative purposes, comparison coatings were prepared using this same procedure except that no DBTDA was used. The Young's modulus values of the coatings were determined, and the results are shown in the following table:

| Radiation Dose (Mrad) | Young's Modulus (KPSI) | |
|---|---|---|
| | Vinyl Chloride Copolymer | Vinyl Chloride Copolymer and DBTDA |
| 1 | ---* | 235 |
| 2 | 298 | 304 |
| 3 | 305 | 320 |
| 5 | 290 | 328 |
| 7 | 310 | 329 |

| | | |
|---|---|---|
| * Not measured | | |

The data show that the coatings containing DBTDA have higher modulus values as compared to the coatings having no DBTDA.

### EXAMPLE 20

During the course of the experiment described in Example 19, it was observed that irradiation of the coatings having no DBTDA caused the coatings to discolor to a pale brown color. It is believed that this discoloration was due to the generation of HCl, i.e., degradation, from the vinyl chloride copolymer upon exposure to electron beam radiation. In contrast, the coatings containing DBTDA did not discolor upon exposure to electron beam radiation. This indicated that the DBTDA protected the vinyl chloride copolymer against degradation caused by irradiation.

To further study this phenomena, 10 ml of a standard Metanil Yellow solution was added to four separate 320 grams samples of a vinyl chloride copolymer prepared according to Example 2. After adding the Metanil Yellow solution to the four samples, 6.4 grams of DBTDA were added to one sample, 16 grams of DBTDA were added to another sample, and 16 grams of an acrylate-functional aromatic urethane (obtained by reacting toluene diisocyanate with pentaerythritol triacrylate and hereinafter referred to as "AFAU") were added to a third sample. Portions of the samples were then coated onto PET supports and cured with 1, 2, 3, 5, or 7 Mrads of electron beam radiation.

The Metanil yellow solution had been prepared by adding 10 grams of dye to 50 ml of a 1:1 solvent blend of THF and methanol. After adding the dye, the solution was allowed to stand for one hour after which any remaining solids were removed by filtration. Metanil Yellow is an acid-base indicator that turns purple in the presence of acid. Hence, the generation of HCl would be detected as a change in color of the coating.

After irradiation with electron beam radiation, the absorbance of the coatings was measured and corrected for caliper. The results are shown in the following table:

| Radiation Dose (Mrad) | Vinyl Chloride Copolymer | Vinyl Chloride Copolymer and 6.4 grams DBTDA | Vinyl Chloride Copolymer and 16 grams DBTDA | Vinyl Chloride Copolymer and 16 grams AFAU |
|---|---|---|---|---|
| 0 | 0.057 | 0.059 | 0.007 | 0.057 |
| 1 | 0.3 | 0.059 | 0.008 | 0.11 |
| 2 | 0.95 | 0.051 | 0.01 | 0.75 |
| 3 | 1.47 | 0.055 | 0.0135 | 1.02 |
| 5 | 1.86 | 0.050 | 0.0076 | 1.97 |
| 7 | 2.08 | 0.057 | 0.018 | 2.25 |

The data show that, after irradiation, substantially no increase in absorbance was observed with coatings containing DBTDA. However, the sample having no DBTDA and the sample containing the conventional catalyst both showed a dramatic increase in absorbance upon exposure to radiation. This supports the hypothesis that DBTDA protects the vinyl chloride copolymer against degradation caused by electron beam radiation.

### EXAMPLE 21

Magnetic dispersions comprising 100 parts by weight magnetic oxide, 4 parts by weight of a radiation curable dispersant with a phosphate group (Desoto 150), 2.5 parts by weight Emcol Phosphate, 1 part by weight alumina, 5 parts by weight carbon black, 12.5 parts by weight of a vinyl chloride copolymer (20% solids in THF) prepared according to Example 2, and 3.1 parts by weight of a radiation curable polyurethane polymer (Desoto 151, 30% solids in THF) were coated onto various supports, dried and cured at 2, 3, 5, or 7 Mrads of electron beam radiation. Other samples were prepared using this same procedure except that the dispersions contained 0.75 parts by weight of DBTDA. Other samples were also prepared using this same procedure except that the dispersions contained 2 parts by weight of DBTDA. The Young's modulus of the coatings were determined and the results are shown in the following table:

| Radiation Dose (Mrad) | Young's Modulus (KPSI) | | |
|---|---|---|---|
| | 0 parts DBTDA | 0.75 parts DBTDA | 2 parts DBTDA |
| 2 | 32 | 73 | 49 |
| 3 | 84 | 102 | 135 |
| 5 | 94 | 137 | 162 |
| 7 | 180 | 199 | 206 |

The data show that at a particular dosage of electron beam radiation, the samples containing DBTDA have higher modulus values than the samples containing no DBTDA.

### EXAMPLE 22

A magnetic recording tape was prepared according to Example 11, except that, in Charge II, 8.2 parts by weight of the Polyurethane Polymer solution was used.

### EXAMPLE 23

A magnetic dispersion was prepared from the following ingredients:

| Charge I | |
|---|---|
| Ingredient | Parts by Weight |
| THF | 92 |
| Propyl gallate | 0.05 |
| Dispersant solution (Radiation curable phoshorate Ester dispersant from Example 3 at 66% solids in Toluene) | 7.5 |
| Emcol Phosphate | 2.0 |
| Barium Ferrite | 100.0 |
| Alumina | 2.95 |
| Vinyl chloride copolymer solution (Vinyl chloride copolymer from Example 2 at 30% solids in THF) | 9.0 |
| Additional THF | 15.0 |

The THF, the dispersant solution, and the Emcol Phosphate were combined in a large blade mixer and mixed for 15 minutes at 1500 rpm. Next, the magnetic oxide and the alumina were slowly added, and mixing continued for an additional 3 hours at 3000 rpm. The vinyl chloride copolymer solution and propyl gallate were then added and mixing continued for an additional 60 minutes at 3000 rpm. The contents of the mixer were then mixed under high shear for 30 minutes. Just prior to charging the contents of the mixer into a horizontal mill, the additional THF was added. The batch was then charged to a horizontal mill and milled pass to pass until smooth using ceramic milling media. The resulting magnetic dispersion was first sieved in order to separate the dispersion from the milling media and then filtered to remove milling debris.

The magnetic dispersion was then combined with the following additional ingredients in the following amounts:

| Charge II | |
|---|---|
| Ingredient | Parts by Weight |
| Polyurethane polymer solution (Polyurethane polymer from Example 10 at 35% solids in THF) | 10.45 |
| Myristic Acid | 1.45 |
| Butyl Stearate | 0.65 |
| THF | 28.0 |
| Cyclohexanone | 11.85 |
| DBTDA | 0.15 |
| Isocyanate crosslinking agent solution (CB-601 at 60% solids in PM acetate) | 3.10 |

For this sample (Sample 23A), the ingredients were slowly added to the sample, in the order listed, under laminar shear conditions. After the addition of the last ingredient, the sample was mixed in a large blade mixer for an additional 15 minutes under laminar shear conditions. The sample was then coated onto one side of a polyethylene terephthalate ("PET") support. The other side of the PET support had a conventional backside coating in accordance with practices known in the art. See, for example, U.S. Pat. No. 4,328,935. After coating, the sample was passed through a magnetic field for quietization. The sample was then dried, whereby a dried magnetizable layer was formed on the PET support. After drying, the magnetizable layer of the sample was calendered and then irradiated with 8 Mrads of electron beam radiation at 175 Kev.

Other embodiments of this invention will be apparent to those skilled in the art from a consideration of this specification or from practice of the invention disclosed herein. Various omissions, modifications, and changes to the principles described herein may be made by one skilled in the art without departing from the true scope of the invention which is indicated by the following claims.

## Claims

1. A magnetic recording medium, comprising a magnetizable layer provided on a nonmagnetizable support, wherein the magnetizable layer comprises a magnetic pigment dispersed in a cured binder, said cured binder being derived from binder materials comprising:
(a) a first polymer having a Tg of about 60°C or more, wherein said first polymer comprises a plurality of isocyanate crosslinkable hydroxy groups and a plurality of radiation crosslinkable groups;
(b) a second polymer having a Tg of about 25°C or less, wherein said second polymer comprises a plurality of isocyanate crosslinkable hydroxy groups and a plurality of radiation crosslinkable groups, wherein the weight ratio of the second polymer to the first polymer is in the range-from 1:19 to 19:1; and
(c) an isocyanate crosslinking agent, wherein the molar ratio of NCO groups from the isocyanate crosslinking agent to the total number of OH groups from the first and second polymers is greater than 0 ; and wherein the binder materials have been cured with radiation.

2. The magnetic recording medium of claim 1, wherein the first polymer is a vinyl chloride copolymer, and the second polymer is a polyurethane polymer.

3. The magnetic recording medium of claim 2, Wherein the polyurethane polymer has a hydroxy equivalent weight in the range from 1000 to 10,000 and an equivalent weight of radiation crosslinkable groups in the range from 1500 to 20,000, and wherein the polyurethane polymer is obtained from polyurethane 5 reactants comprising:
(a) a chain extender having a molecular weight of less than about 200;
(b) a polydiol having a molecular weight of more than about 200, wherein the polydiol is used in an amount such that the polyurethane reactants comprise 20 to 80 percent by weight of the polydiol;
(c) a triol;
(d) a (meth)acrylate functional diol; and
(e) a diisocyanate, wherein the ratio of NCO groups from the diisocyanate to the total number of OH groups from the chain extender, the polydiol, the triol, and the (meth)acrylate functional diol is less than 1.

4. The magnetic recording medium of claim 1, wherein the binder materials further comprise an amount of a radiation curable dispersant effective to help disperse the magnetic pigment in the cured binder, wherein the radiation curable dispersant comprises at least one radiation crosslinkable moiety and at least one dispersing moiety selected from the group consisting of -SO₃M, -OSO₃M, -COOM, and 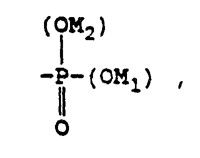 wherein M is H, Li, K, Na, or NH₄; and M₁ and M₂ are independently H, Li, Na, K, NH₄, or a lower alkyl group having 1-6 carbon atoms.

5. The magnetic recording medium of claim 4, wherein the radiation curable dispersant has the formula 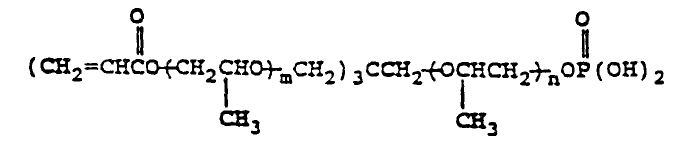 wherein m is 1-10 and n is 1-10.

6. The magnetic recording medium of claim 1, wherein the binder materials further comprise a catalytic amount of dibutyltindiacrylate.

7. A process of making a magnetic recording medium, comprising the steps of:
(a) milling an admixture of ingredients in a solvent to form a magnetic dispersion, wherein the ingredients of the admixture comprise a magnetic pigment and a first polymer,
wherein the first polymer has a Tg of about 60°C or more and comprises a plurality of isocyanate crosslinkable hydroxy groups and a plurality of radiation crosslinkable groups;
(b) after willing, blending a second polymer into the magnetic dispersion,
wherein the second polymer is blended into the magnetic dispersion under laminar shear conditions,
wherein the second polymer has a Tg of about 25°C or less and comprises a plurality of isocyanate crosslinkable hydroxy groups and a plurality of radiation crosslinkable groups; and
wherein the weight ratio of the first polymer to the second polymer is in the range from 1:19 to 19:1;
and blending a sufficient amount of an isocyanate crosslinking agent into the magnetic dispersion such that the molar ratio of NCO groups from the isocyanate crosslinking agent to the total number of OH groups from the first and second polymers is greater than 0;
(c) coating the blended dispersion obtained from step (b) onto a nonmagnetizable support;
(d) after coating, orienting the magnetic pignent in a magnetic field;
(e) drying the coated support in order to form a dried, magnetizable layer on the nonmagnetizable support;
(f) after drying, calendering the surface of the magnetizable layer; and
(g) after calendering, curing the magnetizable layer with radiation.

8. The process of claim 7, wherein the first polymer is a vinyl chloride copolymer and the second polymer is a polyurethane polymer.

9. The process of claim 7, wherein the ingredients of step (a) further comprise a sufficient amount of a radiation curable dispersant effective to help disperse the magnetic pigment in the cured binder, wherein the radiation curable dispersant comprises at least one radiation crosslinkable moiety and at least one dispersing moiety selected from the group consisting of -SO₃M, -OSO₂M, -COOM, and 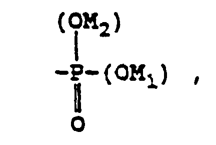 wherein M is H, Li, K, Na, or NH₄; and M₁ and M₂ are independently H, Li, Na, K, NH₄, or a lower alkyl group having 1-6 carbon atoms.

10. The process of claim 9, wherein the radiation curable dispersant has the formula 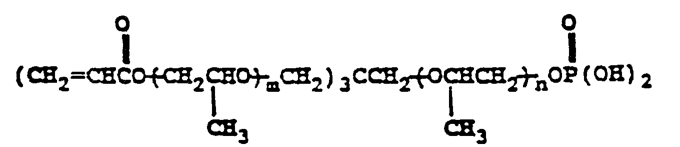 wherein m is 1-10 and n is 1-10.

11. The process of claim 7, wherein step (b) further comprises blending a catalytic amount of dibutyltindiacrylate into the magnetic dispersion.

12. The process of claim 7, wherein step (g) comprises irradiating the magnetizable layer with 1 to 10 Mrads of electron beam radiation having an energy in the range from 125 keV to 400 keV.

## Patentansprüche

1. Magnetisches Aufzeichnungsmaterial, umfassend eine auf einem nichtmagnetisierbaren Träger bereitgestellte magnetisierbare Schicht, wobei die magnetisierbare Schicht ein magnetisches Pigment umfaßt, das in einem gehärteten Binder dispergiert ist, wobei der gehärtete Binder von Bindermaterialien stammt, umfassend:
(a) ein erstes Polymer mit einer Tg von etwa 60°C oder höher, wobei das erste Polymer eine Vielzahl durch Isocyanatgruppen vernetzbare Hydroxygruppen und eine Vielzahl durch Strahlung vernetzbare Gruppen umfaßt;
(b) ein zweites Polymer mit einer Tg von etwa 25°C oder niedriger, wobei das zweite Polymer eine Vielzahl durch Isocyanatgruppen vernetzbare Hydroxygruppen und eine Vielzahl durch Strahlung vernetzbare Gruppen umfaßt, wobei das Gewichtsverhältnis des zweiten Polymers zu dem ersten Polymer im Bereich von 1:19 bis 19:1 liegt; und
(c) ein Isocyanatgruppen enthaltendes Vernetzungsmittel, wobei das Molverhältnis der NCO-Gruppen des Isocyanatgruppen enhaltenden Vernetzungsmittels zu der Gesamtzahl der OH-Gruppen des ersten und des zweiten Polymers größer als 0 ist; und wobei die Bindermaterialien durch Strahlung gehärtet wurden.

2. Magnetisches Aufzeichnungsmaterial nach Anspruch 1, wobei das erste Polymer ein Vinylchloridcopolymer ist und das zweite Polymer ein Polyurethanpolymer ist.

3. Magnetisches Aufzeichnungsmaterial nach Anspruch 2, wobei das Polyurethanpolymer ein Hydroxy-Äquivalentgewicht im Bereich von 1000 bis 10000 besitzt und ein Äquivalentgewicht der durch Strahlung vernetzbaren Gruppen im Bereich von 1500 bis 20000 besitzt, und wobei das Polyurethanpolymer aus den Polyurethanreaktionspartnern erhalten wird, umfassend:
(a) einen Kettenverlängerer mit einem Molekulargewicht von kleiner als etwa 200;
(b) ein Polydiol mit einem Molekulargewicht von größer als etwa 200, wobei das Polydiol in einer Menge verwendet wird, daß die Polyurethanreaktionspartner 20 bis 80 Gew.-% des Polydiols umfassen;
(c) ein Triol;
(d) ein (Meth)acrylatfunktionelles Diol: und
(e) ein Diisocyanat, wobei das Verhältnis der NCO-Gruppen des Diisocyanats zu der Gesamtzahl der OH-Gruppen des Kettenverlängerers, des Polydiols, des Triols und des (Meth)acrylatfunktionellen Diols kleiner als 1 ist.

4. Magnetisches Aufzeichnungsmaterial nach Anspruch 1, wobei die Bindermaterialien außerdem eine Menge eines durch Strahlung härtbaren Dispersionsmittels umfassen, die wirksam ist, die Dispersion des magnetischen Pigments in dem gehärteten Binder zu fördern, wobei das durch Strahlung härtbare Dispersionsmittel mindestens einen durch Strahlung vernetzbaren Rest und mindestens einen dispergierenden Rest, ausgewählt aus der Gruppe, bestehend aus -SO₃M, -OSO₃M, -COOM und 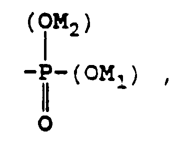 umfaßt, wobei M ein Wasserstoffatom, Li, K, Na oder NH₄ bedeutet; und M₁ und M₂ unabhängig ein Wasserstoffatom, Li, Na, K, NH₄ oder einen Niederalkylrest mit 1-6 Kohlenstoffatomen bedeuten.

5. Magnetisches Aufzeichnungsmaterial nach Anspruch 4, wobei das durch Strahlung härtbare Dispersionsmittel die nachstehende Formel besitzt 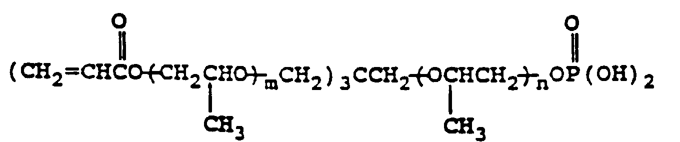 wobei m 1-10 bedeutet und n 1-10 bedeutet.

6. Magnetisches Aufzeichnungsmaterial nach Anspruch 1, wobei die Bindermaterialien außerdem eine katalytische Menge Dibutylzinndiacrylat umfassen.

7. Verfahren zur Herstellung eines magnetischen Aufzeichnungsmaterials, umfassend die Schritte:
(a) Vermahlen eines Gemisches von Bestandteilen in einem Lösingsmittel zu einer magnetischen Dispersion, wobei die Bestandteile des Gemisches ein magnetisches Pigment und ein erstes Polymer umfassen.,
wobei das erste Polymer eine Tg von etwa 60°C oder höher besitzt und eine Vielzahl durch Isocyanatgruppen vernetzbare Hydroxygruppen und eine Vielzahl durch Strahlung vernetzbare Gruppen umfaßt;
(b) nach dem Vermahlen, Einmischen eines zweiten Polymers in die magnetische Dispersion,
wobei das zweite Polymer unter laminaren Scherbedingungen in die magnetische Dispersion eingemischt wird,
wobei das zweite Polymer eine Tg von etwa 25°C oder niedriger besitzt und eine Vielzahl durch Isocyanatgruppen vernetzbare Hydroxygruppen und eine Vielzahl durch Strahlung vernetzbare Gruppen umfaßt; und
wobei das Gewichtsverhältnis des ersten Polymers zu dem zweiten Polymer im Bereich von 1:19 bis 19:1 liegt;
und Einmischen einer ausreichenden Menge eines Isocyanatgruppen enthaltenden Vemetzungsmittels in die magnetische Dispersion, sodaß das Molverhältnis der NCO-Gruppen des Isocyanatgruppen enthaltenden Vemetzungsmittels zu der Gesamtzahl der OH-Gruppen des ersten und des zweiten Polymers größer als 0 ist;
(c) Auftragen der gemischten Dispersion, die in dem Schritt (b) erhalten wurde, auf einen nichtmagnetisierbaren Träger;
(d) nach dem Beschichten, Ausrichten des magnetischen Pigments in einem magnetischen Feld;
(e) Trocknen des beschichteten Trägers, wobei eine getrocknete, magnetisierbare Schicht auf dem nichtmagnetisierbaren Träger erzeugt wird;
(f) nach dem Trocknen, Kalandern der Oberfläche der magnetisierbaren Schicht; und
(g) nach dem Kalandern, Härten der magnetisierbaren Schicht durch Strahlung.

8. Verfahren nach Anspruch 7, wobei das erste Polymer ein Vinylchloridcopolymer ist und das zweite Polymer ein Polyurethanpolymer ist.

9. Verfahren nach Anspruch 7, wobei die Bestandteile des Schrittes (a) außerdem eine ausreichende Menge eines durch Strahlung härtbaren Dispersionsmittels umfassen, die wirksam ist, die Dispersion des magnetischen Pigments in dem gehärteten Binder zu fördern, wobei das durch Strahlung härtbare Dispersionsmittel mindestens einen durch Strahlung vernetzbaren Rest und mindestens einen dispergierenden Rest, ausgewählt aus der Gruppe, bestehend aus -SO₃M, -OSO₃M, -COOM und 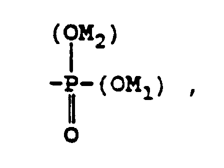 umfaßt, wobei M ein Wasserstoffatom, Li, K, Na oder NH₄ bedeutet; und M₁ und M₂ unabhängig ein Wasserstoffatom, Li, Na, K, NH₄ oder einen Niederalkylrest mit 1-6 Kohlenstoffatomen bedeuten.

10. Verfahren nach Anspruch 9, wobei das durch Strahlung härtbare Dispersionsmittel die Formel besitzt 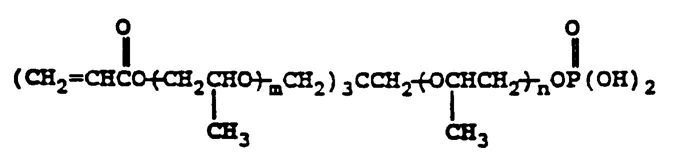 wobei m 1-10 bedeutet und n 1-10 bedeutet.

11. Verfahren nach Anspruch 7, wobei der Schritt (b) außerdem das Einmischen einer katalytischen Menge Dibutylzinndiacrylat in die magnetische Dispersion umfaßt.

12. Verfahren nach Anspruch 7, wobei der Schritt (g) das Bestrahlen der magnetisierbaren Schicht mit 1 bis 10 Mrad Elektronenstrahlen mit einer Energie im Bereich von 125 keV bis 400 keV umfaßt.

## Revendications

1. Un support d'enregistrement magnétique, comportant une couche magnétisable prévue sur un support non magnétisable, dans lequel la couche magnétisable comporte un pigment magnétique dispersé dans un agent de liaison durci, cet agent de liaison durci étant dérivé de matériaux de liaison comportant:
(a) un premier polymère présentant une Tg (température de transition vitreuse) d'environ 60°C ou plus, ledit premier polymère comportant une pluralité de groupes hydroxy réticulables de type isocyanate et une pluralité de groupes réticulables par radiation;
(b) un second polymère ayant une Tg d'environ 25°C ou moins, ce second polymère comportant une pluralité de groupes hydroxy réticulables de type isocyanate et une pluralité de groupes réticulables par radiation, le rapport pondéral du second polymère au premier polymère se situant dans la gamme de 1:19 à 19:1; et
(c) un agent réticulant de type isocyanate, dans lequel le rapport molaire des groupes NCO provenant de l'agent de réticulation de type isocyanate au nombre total de groupes OH provenant des premier et second polymères est supérieur à 0; tandis que les matériaux de liaison ont été durcis par radiation.

2. Le support d'enregistrement magnétique de la revendication 1, dans lequel le premier polymère est un copolymère de chlorure de vinyle et le second polymère est un polymère de type polyuréthane.

3. Le support d'enregistrement magnétique de la revendication 2, dans lequel le polymère de type polyuréthane présente un poids équivalent en hydroxy se situant dans la gamme de 1000 à 10 000 et un poids équivalent de groupes réticulables par radiation dans la gamme des 1500 à 20 000, le polymère de type polyuréthane étant obtenu à partir de réactifs de type polyuréthane comportant:
(a) un prolongateur de chaîne ayant une poids moléculaire inférieur à environ 200;
(b) un polydiol ayant un poids moléculaire supérieur à environ 200, le polydiol étant utilisé en une quantité telle que les réactifs de type polyuréthane comporte de 20 à 80% en poids du polydiol;
(c) un triol;
(d) un diol Fonctionnel de type (meth)acrylate; et
(e) un diisocyanate dans lequel le rapport des groupes NCO provenant du diisocyanate au nombre total de OH provenant du prolongateur de chaîne, du polydiol. du triol et du diol Fonctionnel de type (méth) acrylate est inférieur à 1.

4. Le support d'enregistrement magnétique de la revendication 1, dans lequel les matériaux de liaison comportent en outre une quantité d'un dispersant durcissable par radiation, efficace pour favoriser la dispersion du pigment magnétique dans l'agent de liaison durci, l'argent dispersant durcissable par dispersion comportant au moins une partie réticulable par radiation et au moins une partie dispersante choisie dans le groupe constitué de -SO₃M, -OSO₃M, -COOM, et 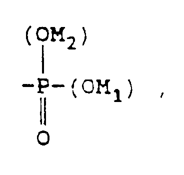 où M est H, Li, K, Na ou NH₄; tandis que M₁ et M₂ représentent indépendamment H, Li, Na, K, NH₄ ou bien un groupe alkyle inférieur avant de 1 à 6 atomes de carbones.

5. Le support d'enregistrement magnétique de la revendication 4, dans lequel l'agent dispersant durcissable par radiation a la formule: 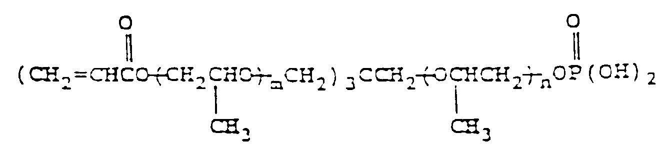 dans laquelle m de là 10 et n est de 1 à 10.

6. Le support d'enregistrement magnétique selon la revendication 1, dans lequel les matériaux de liaison comportent en outre une quantité catalytique de diacrylate de dibutyl-étain.

7. Un procédé pour réaliser un support d'enregistrement magnétique comportant les étapes de:
(a) broyer un mélange d'ingrédients dans un solvant afin de former une dispersion magnétique. les ingrédients du mélange comportant un pigment magnétique et un premier polymère,
tandis que le premier polymère présente une Tg d'environ 60°C ou plus et comporte une pluralité de groupes hydroxy réticulables de type isocyanate et une pluralité de groupes réticulables par radiation;
(b) après le broyage, mélanger un second polymère dans la dispersion magnétique,
le second polymère étant mélangé dans la dispersion magnétique sous des conditions laminaires de cisaillement,
tandis que le second polymère présente une Tg d'environ 25°C au moins et Comporte une pluralité de groupes hydroxy réticulables de type isocyanate et une pluralité de groupes réticulables par radiation; et
que le rapport pondéral du premier polymère au second polymère se situe dans la gamme de 1:19 à 19:1;
après quoi on mélange une quantité suffisante d'un agent réticulant de type isocyanate dans la dispersion magnétique de sorte que le rapport molaire des groupes NCO provenant de l'agent réticulant d'isocyanate au nombre total de groupes OH dans les premier et second polymères est supérieur à 0;
(c) appliquer en revêtement la dispersion mélangée obtenue à l'étape (b) sur un support non magnétisable;
(d) après revêtement, orienter le pigment magnétique dans un champ magnétique;
(e) sécher le support revêtu afin de réaliser une couche séchée magnétisable sur le support non-magnétisable;
(f) après séchasse calandrer la surface de la couche magnétisable; et
(g) après le calandrage, durcir la couche magnétisable par radiation.

8. Le procédé de la revendication 7, dans lequel le premier polymère est un copolymère de chlorure de vinyle et le second polymère est un polymère de polyuréthane.

9. Le procédé de la revendication 7, dans lequel les ingrédients de l'étape (a) comporte en outre une quantité suffisante d'un agent dispersant durcissable par radiation, efficace pour Favoriser la dispersion du pigment magnétique dans l'agent de liaison durci, l'agent dispersant durcissable par radiation comportant au moins une partie réticulable par radiation et au moins une partie dispersante choisie dans les groupes constitués par -SO₃M, -OSO₃M, -COOM, et 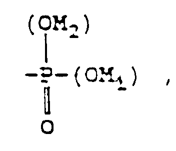 où M est H, Li, K, Na ou NH₄; tandis que M₁ et M₂ représentent indépendamment H, Li, Na, K, NH4 ou bien un groupe alkyle inférieur ayant de 1 à 6 atomes de carbones.

10. Le procédé de la revendication 9, dans lequel l'agent dispersant durcissable par radiation présente la formule: 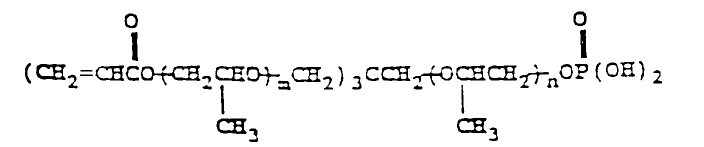 dans laquelle m est de 1 à 10 et n est de 1 à 10.

11. Le procédé de la revendication 7, dans lequel l'étape (b) comporte en outre le mélange d'une quantité catalytique de diacrylate de dibutyl-étain dans la dispersion magnétique.

12. Le procédé de la revendication 7, dans lequel l'étape (g) comporte l'irradiation de la couche magnétisable avec de 1 à 10 Mrads d'une radiation de faisceaux électroniques, qui présentent une énergie dans la gamme de 125 keV à 400 keV.
